(19) Europäisches Patentamt

European Patent Office

Office européen des brevets

(11) **EP 3 370 347 A1**

(12) **EUROPEAN PATENT APPLICATION**

(43) Date of publication:
**05.09.2018 Bulletin 2018/36**

(51) Int Cl.:
*H04B 7/0452* (2017.01)    *H04B 7/06* (2006.01)
*H04L 5/00* (2006.01)    *H04W 84/12* (2009.01)
*H04L 12/28* (2006.01)    *H04L 12/54* (2013.01)

(21) Application number: **17158972.4**

(22) Date of filing: **02.03.2017**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(71) Applicant: **Nokia Solutions and Networks Oy
02610 Espoo (FI)**

(72) Inventors:
• **ATAWIA, Ramy
  2018 Antwerp (BE)**
• **GACANIN, Haris
  2018 Antwerp (BE)**

(74) Representative: **Land, Addick Adrianus Gosling et al
Arnold & Siedsma
Bezuidenhoutseweg 57
2594 AC The Hague (NL)**

(54) **METHOD, CONTROLLER, ACCESS NODE AND COMPUTER PROGRAM PRODUCT OF ASSOCIATING A MULTI-USER MULTIPLE-INPUT MULTIPLE-OUTPUT, MU-MIMO, CAPABLE WIRELESS ACCESS NODE TO A WIRELESS NETWORK**

(57)    The present patent disclosure concerns a method of associating a multi-user multiple-input multiple-output, MU-MIMO, capable wireless access node to a wireless network, the wireless network comprising one or more master access nodes with a wired backhaul interface for coupling the master access node and devices connected thereto to a backbone network, the method comprising iteratively connecting the access node to each of the master access nodes having MU-MIMO enabled; obtaining one or more first available data throughputs for respective potential multi-user groups to be served by the master access node for each of the MU-MIMO capable master access nodes having MU-MIMO enabled; obtaining one or more second available data throughputs for respective potential multi-user groups served by the access node when connected to the master access node; and associating the access node to the master access node based on the obtained first and second available data throughputs.

FIG. 3A

**Description**

The present patent disclosure concerns Multi-User Multiple-Input Multiple-Output, MU-MIMO, association of wireless access nodes to a wireless network. Particular embodiments relate to a method, a controller, an access node and a computer program product for associating a multi-user multiple-input multiple-output, MU-MIMO, capable wireless access node to a wireless network.

Indoor networks contain an increasingly large number of access nodes or access points to allow user devices to connect to the network and a backbone network such as the internet. The interface for allowing users to connect to the access node is referred to as a "fronthaul interface", which generally is a wireless interface. One or more of the access nodes in the network serve to connect to the backbone network via a backhaul interface. Access nodes providing the connection to the backbone network are referred to as "master access nodes" (mAN).

Other access nodes use their backhaul interface to connect to a mAN, which may be wireless. A wireless range extender is an example of such an access node. An access node wirelessly connecting to a further access node, such as a master access node, is further referred to as an "access node".

Each access node is preferably associated to one mAN to provide a backhaul connection to the access node, and user devices connected to the access node via its fronthaul interface. The connection of the access node to the mAN will have a negative impact on the available data throughput for users also served by the fronthaul interface of the mAN. This is because the newly associated access node will use the resources of the mAN and therefore the access node competes with the user devices served by this mAN. Moreover, this competition for resources of the mAN will impact the fronthaul throughput of the access node. In other words, the user devices served by the fronthaul interface of the access node will be able to use a data throughput according to a part of the available resources of the mAN that may be used by the access node.

MU-MIMO is a set of wireless technologies used for wireless communication, and is an optional feature for instance included in the IEEE 802.11ac and IEEE 802.11 ax standards, for wireless communication. Access nodes with MU-MIMO capability use multiple antennas and the relative positions of connected devices to accordingly create a phased pattern with which multiple clients can be served with a signal independently and at the same time. MU-MIMO therefore may at least partially alleviates the above problem of competition for resources, by providing a larger wireless data throughput.

However, when multiple mANs are available, an access node will in general connect to the mAN having the strongest signal or being closest in range, for example based on a received signal strength indicator or other parameter indicative of a signal strength and/or distance of the mAN. It may for instance be that the mAN is not MU-MIMO capable, the conditions, such as location, may not be met to provide for MU-MIMO to be enabled.

The access node, when connected wirelessly to a master access node, will therefore generally impact the quality of service of other devices connected to the mAN it connects to. Furthermore, the quality of service of the users connected to the access node will be impacted by which mAN the access point is connected to.

It is therefore an object of embodiments of the present patent disclosure to associate access nodes with a mAN that improves the quality of service of devices wirelessly connected to the master access node to which the access node is connected and further devices connected to the access node.

According to a first aspect of the present patent disclosure there is provided a method of associating a multi-user multiple-input multiple-output, MU-MIMO, capable wireless access node to a wireless network, the wireless network comprising one or more master access nodes comprising a wired backhaul interface for coupling the master access node to a backbone network, the method comprising:

> determining whether the one or more master access nodes are MU-MIMO capable;
> iteratively connecting the access node to each of the master access nodes having MU-MIMO enabled;
> obtaining one or more first available data throughputs for respective potential multi-user groups to be served by the master access node for each of the MU-MIMO capable master access nodes having MU-MIMO enabled;
> obtaining one or more second available data throughputs for respective potential multi-user groups served by the access node when connected to the master access node; and
> associating the access node to the master access node based on the obtained first and second available data throughputs.

In other words, the access node is associated to an mAP with which both backhaul and fronthaul link of both access node and mAN are utilized as much as possible by using MU-MIMO. This is done by associating the access node to the mAN that can accommodate the access node in a multi-user group such as a downlink beamforming group (or any other suitable MU-MIMO technique). On the front-haul link, the possibility of having a multi-user group, such as a beamforming group, for the users connected directly to the AN is also taken into consideration while choosing the mAP to which the access node should connect, that is, to which the access node will be associated in the wireless network.

In order to use MU-MIMO, the access point and mAP referred to in the present patent application are suitable for MU-MIMO communication, and may for instance comprise a suitable number of antenna's, an antenna array, a phased array or the like. Furthermore, the access point and mAP may comprise a processor suitable for MU-MIMO signal processing.

In an embodiment, the method further comprises: determining a first score for each master access node based on the obtained one or more available data throughputs served by the master access node;
determining a second score for each master access node based on the obtained available user data throughputs for respective potential multi-user groups served by the access node;
calculating a total score for each MU-MIMO master access node based on the first and second scores,
wherein the access node associates with the master access node for which a highest total score is calculated.

The calculation of a score is a preferred embodiment upon which the step of associating is then based. It will be understood that other ways of deciding which master access node is the most suitable for associating the access point, based on the throughputs that can be reached by the fronthaul and backhaul multi-user groups.

In an embodiment, the obtaining one or more available data throughputs comprises:

determining the potential multi-user groups to be served by the master access node to which the access node is connected;
iteratively attempting to join the potential multi-user groups by the access point; and
determining the available data throughputs for each of the potential multi-user groups where an attempted join of the access point was successful.

In a preferred embodiment, the obtaining one or more available data throughputs for respective potential multi-user groups comprises:

when pre-selected multi-user groups are obtainable from the master access node:

obtain the pre-selected multi user groups from the master access node; and
when one or more of the pre-selected multi-user groups may be joined by the access point, determine the first score to be the maximum available data throughput of available data throughputs of the respective multi-user groups, and

when pre-selected multi-user groups are not obtainable from the master access node, determine the first score to be the average available throughput of all potential multi-user groups that the access node was able to join.

According to a further embodiment, the method further comprises:

attempting to obtain a first demanded data throughput for each device wirelessly connected to the master access node;
obtaining a first device data throughput for each device wirelessly connected to the master access node, wherein the first device data throughput indicates a data throughput for each device after the access node is connected to the respective master access node; and
when the demanded data throughput is unavailable, obtaining a second device data throughput for each device wirelessly connected to the master access node, wherein the second device data throughput indicates a data throughput for each device before the access node is connected to the respective master access node,
wherein the associating of the access node is further based on the obtained first device data throughput and the first demanded data throughput or the second device data throughput.

According to a specific embodiment, the method further comprises, when the first demanded data throughput is available, determining a third score for each master access node based on the first device data throughput and the first demanded data throughput; and when the first demanded data throughput is unavailable, determining a third score for each master access node based on the first device data throughput and the second data throughput, wherein the total score is calculated based on the first, second and third scores.

According to a further embodiment, the access node comprises a backhaul interface for coupling with the master access node and a fronthaul interface for coupling user devices to the access node, wherein the obtaining one or more available user data throughputs for respective potential multi-user groups served by the access node, for each master access node to which the access node is connected, obtaining a list of one or more user devices connected to the access point; determining potential fronthaul multi-user groups to be served by the access node; determining the available fronthaul data throughputs for each of the potential fronthaul multi-user groups; and determining a second score based on the available fronthaul data throughputs, wherein the total score is calculated based on the first and second scores. According to a preferred embodiment, the determining of the second score comprises:

when pre-selected fronthaul multi-user groups are available to the access node:

obtain a list of the pre-selected fronthaul multi-user groups;
when one or more of the pre-selected multi-user groups is available to the access point, determine the second score to be the sum of available data throughput of the pre-determined multi-user groups; and

when none of the pre-selected multi-user groups may be joined by the access point, determine the second score to be the average throughput of all the potential fronthaul multi-user groups.

According to an embodiment, the access node comprises a backhaul interface for coupling with the master access node and a fronthaul interface for coupling user devices to the access node, the method further comprising:

attempting to obtain a second demanded data throughput for each user device wirelessly connected to the access node;
obtaining a third device data throughput for each user device wirelessly connected to the access node; and
wherein the demanded data throughput is available, the associating of the access node is further based on the obtained third device data throughput and the second demanded data throughput.

According to a preferred embodiment, the method further comprises:

when the second demanded data throughput is available, determining a fourth score for each master access node based on the third device data throughput and the second demanded data throughput, wherein the total score is calculated based on the first, second, third and fourth scores.

According to a further embodiment, the total score for each master access node is calculated based by multiplying the third score, the fourth score and the lowest one of the first and second scores, wherein, when a score is unavailable, said unavailable score is equal to one.
According to a further aspect of the present patent disclosure, there is provided a controller, wherein the controller is configured to:

determine whether the one or more master access nodes are MU-MIMO capable;
iteratively connect the access node to each of the master access nodes having MU-MIMO enabled;
obtain one or more first available data throughputs for respective potential multi-user groups to be served by the master access node for each of the MU-MIMO capable master access nodes having MU-MIMO enabled;
obtain one or more second available data throughputs for respective potential multi-user groups served by the access node when connected to the master access node; and
associate the access node to the master access node based on the obtained first and second available data throughputs.

It will be understood that the controller may be configured in further embodiments for performing the method steps according to the first aspect of the present patent disclosure, and will provide the same or similar advantages as for the method steps.
According to a further aspect of the present patent disclosure, there is provided a multi-user multiple-input multiple-output, MU-MIMO, capable access node, comprising:

a backhaul interface configured for coupling the access node to a backbone network; and
a fronthaul interface configured for wirelessly connecting the access node to one or more user devices; and
a controller, wherein the controller is configured to:

determine whether the one or more master access nodes are MU-MIMO capable;
iteratively connect the access node to each of the master access nodes having MU-MIMO enabled;
obtain one or more first available data throughputs for respective potential multi-user groups to be served by the master access node for each of the MU-MIMO capable master access nodes having MU-MIMO enabled;
obtain one or more second available data throughputs for respective potential multi-user groups served by the access node when connected to the master access node; and

associate the access node to the master access node based on the obtained first and second available data throughputs.

According to an embodiment, the controller is further configured to:

attempt to obtain a first demanded data throughput for each device wirelessly connected to the master access node; obtain a first device data throughput for each device wirelessly connected to the master access node, wherein the first device data throughput indicates a data throughput for each device after the access node is connected to the respective master access node; and

when the demanded data throughput is unavailable, obtain a second device data throughput for each device wirelessly connected to the master access node, wherein the second device data throughput indicates a data throughput for each device before the access node is connected to the respective master access node, wherein the associating of the access node is further based on the obtained first device data throughput and the first demanded data throughput or the second device data throughput.

It will be understood that the access node may be configured in further embodiments for performing the method steps according to the first aspect of the present patent disclosure, and will provide the same or similar advantages as for the method steps.

Further aspects of the present patent disclosure are described by the dependent claims. The features from the dependent claims, features of any of the independent claims and any features of the other dependent claims may be combined as considered appropriate to the person of ordinary skill in the art, and not only in the particular combinations as defined by the claims.

Brief description of figures

The accompanying drawings are used to illustrate presently preferred non-limiting exemplary embodiments of methods and devices of the present patent disclosure. The above and other advantages of the features and objects of the present patent disclosure will become more apparent and the present patent disclosure will be better understood from the following detailed description when read in conjunction with the accompanying drawings, in which:

Figure 1A schematically illustrates an embodiment of an access node according to the present patent disclosure; Figure 1B schematically illustrates an embodiment of a master access node according to the present patent disclosure;

Figure 2 schematically illustrates a flowchart of an embodiment of a method according to the present patent disclosure;

Figure 3A schematically illustrates an access node association according to embodiments of the present patent disclosure; and

Figure 3B schematically illustrates an access node association according to embodiments of the present patent disclosure.

Description of embodiments

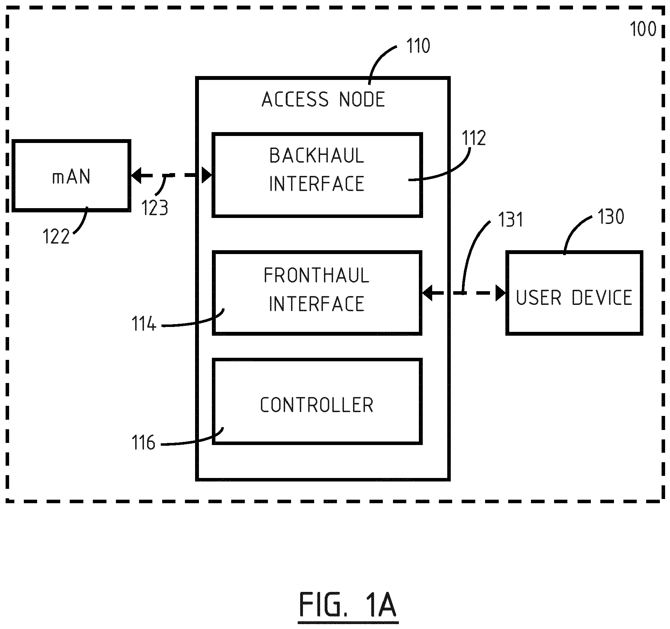

Figures 1A shows an access node 110 in a network 100, e.g. an indoor or home network. "Access node" is used to refer to an access node wirelessly connected, as shown with dashed arrow 123, to a master access node (mAN) 122 via its wireless backhaul interface 112. The access node may have one or more user devices 130 connected via its wireless fronthaul interface 114, as shown with dashed arrow 131, such that the user devices 130 may be connected to the master access node 122 through the access node 110. The mAN 122 may then provide a connection to other user devices and/or access points in the network 100 and to a backbone network such as the internet.

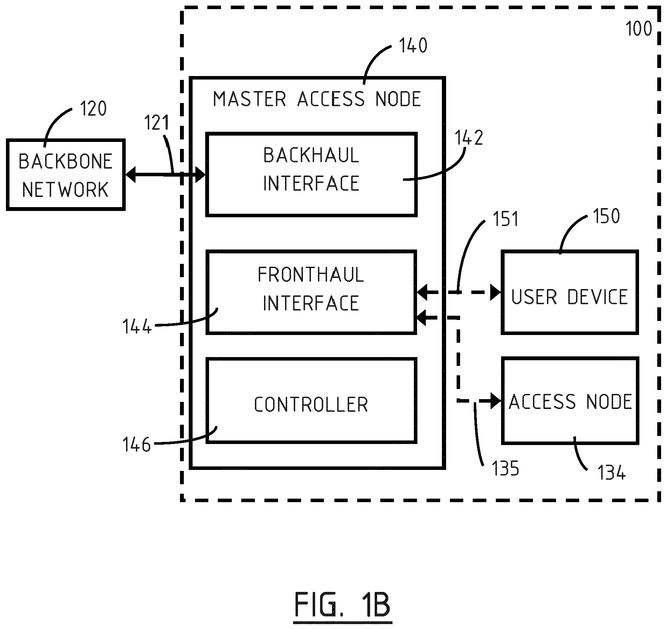

Figure 1B shows a master access node 140 in the network 100. "Master access node" is used to refer to an access node connected via a backhaul link or interface 142 to couple to a backbone network 120, as shown with arrow 121, which may be the internet. The backhaul interface 142 is preferably a wired interface, e.g. suitable for cable internet or an optical fiber connection, since a wired connection may provide a larger bandwidth than a wireless connection. The master access node may have one or more user devices 150 connected via its fronthaul interface 144, as shown with dashed arrow 151, such that the user devices 150 may be connected to the indoor network 100 and the backbone network 120. The master access node 140 may further serve an access node 134 also connected via the fronthaul interface 144 of the master access node, as shown with dashed arrow 135.

The connection to the backbone network 120 may occur through other devices, such as an optical fiber modem. Then, master access node 140 may for instance be connected to the optical fiber modem with an Ethernet connection.

The access node 110 may be used as a master access node and vice versa, in case the access node has a suitable backhaul interface to connect to the backbone network 120.

In an embodiment, the access node 110 and master access node further comprise a controller 116, 146, for respectively controlling the access node and master access node and for performing the method steps according to the present disclosure. The access node 110 and master access node 140 referred to in the present patent application are suitable for MU-MIMO communication, and may for instance comprise a suitable number of antenna's, an antenna array, a phased array or the like.

The access node and master access node may further comprise a processor suitable for MU-MIMO signal processing. The controller and the processor may be a single unit. The controller may furthermore be a hardware unit or stored suitable instructions to be executed by the processor. The method steps may furthermore be stored as executable instructions on a suitable storage medium of the access node 110 and/or master access node 140.

According to another embodiment, the controller may be incorporated into a computing device, such as a remote management device operating the access node and master access nodes in the network. The controller is suitable for respectively controlling the access node and master access node and for performing the method steps according to the present disclosure. The controller may be implemented as a hardware unit or as software, that is, as stored suitable instructions to be executed by a processor of the computing device. The method steps may furthermore be stored as executable instructions on a suitable storage medium of the computing device.

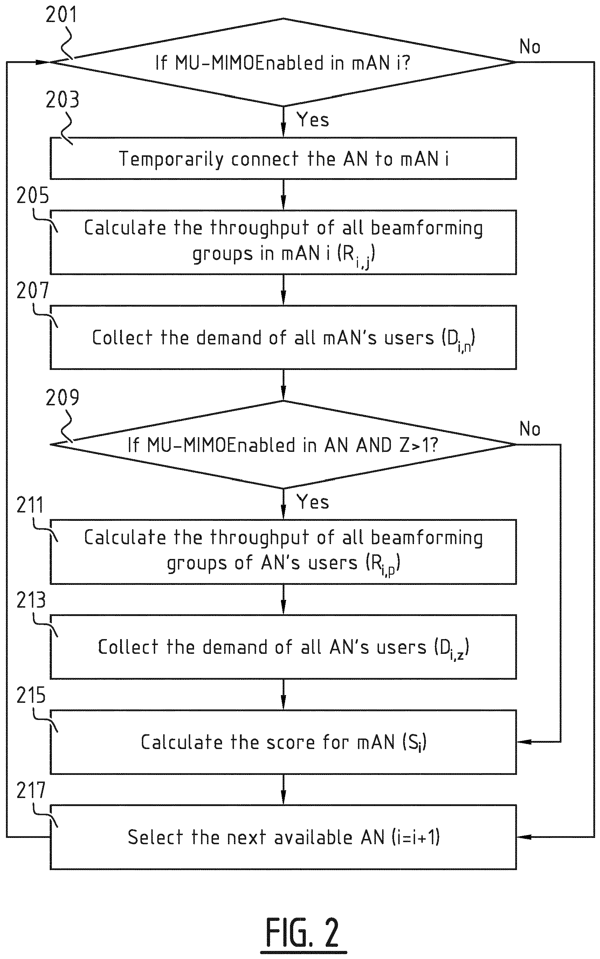

Now referring to Figure 2, preferred embodiments of the various steps of the method for associating an access node to a master access node are illustrated as an algorithm. In Figure 2, step 201 indicates an embodiment of the step of determining whether the one or more mANs have MU-MIMO enabled. In case the currently selected mAN i does not have MU-MIMO enabled, the next mAN in a list of mANs is selected in step 217. The list may be a list of mANs that are detected by the access node.

Step 203 indicates an embodiment of the step of iteratively connecting the access node to each of the master access nodes having MU-MIMO enabled. In this embodiment, the access node is, in other words, temporarily connected to the mAN i. The temporary connection is made to perform the various steps of obtaining information on the throughputs of potential multi-user groups, such as beamforming groups, when the AN is connected to mAN i the and would potentially be part of these groups when associated to this mAN i. When temporarily connected to mAN i, the further steps are executed. Temporarily in this respect means long enough to perform the steps as desired. If some of these steps are unsuccessful, an upper time limit may be set after which the AN may for instance connect to the further mAN i+1.

Step 205 indicates an embodiment of obtaining one or more first available data throughputs for respective potential multi-user groups to be served by the mAN i. Available in this respect may also mean achievable, indicating the achievable data throughput of a multi-user group which may be joined by the access node. The multi-user groups may be beamforming groups.

For each candidate mAN i, the number of associated users is denoted by $N_i$. Accordingly, a total of $M_i$ beamforming groups can be formed from the $N_i$ users and the AN where

$$M_i = \sum_{k=2}^{N_i+1} {}^{N_i+1}C_k$$

Herein, ${}^{Ni+1}C_k$ is the number of combinations with k devices from the set of $N_i$ users devices plus the one access node ($N_i$+ 1). Although groups having at least two devices are taken into account, i.e. k = 2...$N_i$+1, also "groups" of a single device, i.e. k = 1...$N_i$+1, may be taken into account if so desired according to circumstances.

The AN joins each of the groups if available to the AN. The availability may depend on the distance of the AN to the other devices in the group, the technical capabilities of the devices and so forth. Then, the achievable data throughput of each group j is denoted by $R_{i,j}$, for instance with a unit of Mbps, or any other suitable unit.

The mAN will select $L_i$ beamforming groups to be served according to its implemented group selection algorithm. The $L_i$ groups may be available for use in the method in case the mAN is configured to output the groups, for instance to the controller performing the method. The multi-user groups $L_i$ may also be unavailable, for instance because the multi-user groups are not explicitly reported by the mAN to the controller. Although in this case $L_i$ would be empty, multi-user groups may in fact be formable or formed, it is merely unknown for performing the method.

From the obtained $R_{i,j}$, a first score $S_{i,1}$ may be calculated for the mAN to indicate the achievable back-haul throughput of the mAN, depending on the AN being able to join any of the $L_i$ beamforming groups and on whether the $L_i$ beamforming groups are unavailable. In an embodiment, the first score $S_{i,1}$ is calculated according to:

$$S_{i,1} = \begin{cases} \max\{ R_{i,j}\delta_{i,j} \} & if \quad AN \in L_i \ AND \ L_i \neq \emptyset \\ 1 & if \quad AN \notin L_i \ AND \ L_i \neq \emptyset \\ \sum_{j=1}^{M_i} R_{i,j}\delta_{i,j} \ / \ \sum_{j=1}^{M_i} R_{i,j} & if \quad L_i = \emptyset \end{cases}$$

Herein, 0 indicates an empty set. The first score may be calculated for two cases based on the availability of the selected beamforming groups $L_i$ by the mAN. In case of availability of $L_i$, and in case the AN is able to join any of the groups in $L_i$ (i.e. the AN is selected to be part of any group of $L_i$), the score will have the maximum throughput value, since $\delta_{i,j}$ is a binary variable that is equal to 1 if the AN can be included in group j, and equals 0 otherwise.

If the AN is not able to join any of the groups $L_i$, the first score is set to 1. In general, this indicates that the first score does not have an effect on a final calculated score for mAN i. In case $L_i$ is unavailable (i.e. the output of grouping technique is unknown), the ratio of the data throughput of all the groups which included the AN over the data throughputs of all groups will be used to calculate the score of this step. This provides a way to estimate the effectiveness of the presence of the AN in the formed multi-user groups.

The first score may be calculated after step 205 as a separate step, but may also be calculated together with other scores to calculate a total score for mAN i, e.g. in step 215 below.

In step 207 the data throughput demanded by the other user devices served by the fronthaul interface of the mAN may be obtained, which will be described in relation to the third score below.

According to an embodiment, step 209 indicates a step of determining whether MU-MIMO is enabled in the AN, and whether the number of user devices Z connected to the AN is larger than one. In case there is only one, no beamforming groups or other multi-user groups are to be formed. If this condition is not met, the method may continue to step 215 to calculate a score for the mAN i, and thereafter continue with the further mAN i+1.

After connecting the AN to the mAN i, more than one user might be served by the AN's fronthaul interface, and multi-user groups may be formed with two or more user devices. However, in case one user device is connected to the AN's fronthaul interface, i.e. Z = 1, a "group" with one user device may also be taken into account.

Step 211 may be a part of the step of obtaining one or more second available data throughputs for respective potential multi-user groups served by the access node when connected to the mAN i. In total, $E_i$ beamforming groups can be obtained by $Z_i$ fronthaul users connected to the AN, when the AN is connected to mAN i. $E_i$ may be calculated similar to $M_i$. In step 211, the available data throughput for each group p of a total number of groups $E_i$, denoted with $R_{i,p}$, is obtained or calculated.

A second score $S_{i,2}$ may be calculated to represent the chance of creating a MU-MIMO multi-user group, e.g. a beamforming group, on the AN's fronthaul interface. The obtainable data throughput of each multi-user group p is denoted below by $R_{i,p}$. Assuming that $Y_i$ groups will be selected from all possible groups, i.e. $E_i$, by the AN according to its selection algorithm, the second score is determined through:

$$S_{i,2} = \begin{cases} \sum_{p=1}^{Y_i} R_{i,p} & if \quad Y_i \neq \emptyset \ AND \ \lambda = 1 \\ 1 / E_i \times \sum_{p=1}^{E_i} R_{i,p} & if \quad Y_i = \emptyset \ AND \ \lambda = 1 \\ 1 & if \quad \lambda = 0 \end{cases}$$

The first condition is used to calculate the score in case of the selected groups being available (i.e. $Y_i$ is not empty, 0) and the AN enables MU-MIMO (i.e. $\lambda=1$). When this condition is met, the second score $S_{i,2}$ is set to the sum of data throughputs of all groups of $Y_i$.

If, on the other hand, the beamforming groups $Y_i$ are not available, the average throughput of all groups $E_i$ will be used. The third condition (i.e. $S_{i,2}=1$) is set to one, which in a preferred embodiment indicates that this score is not effective for the total score of mAN i in case the AN does not employ MU-MIMO (i.e. $\lambda=0$).

In general, determining which mAN the AN should associate with by the obtaining the first and second device data throughputs, being data throughputs of multi-user groups served by the mAN and the AN respectively, and further optionally incorporating these in the calculated first and second scores, allows for the user experienced quality of service for user devices connected to both mAN and AN, to be improved compared to for instance connecting the AN to the nearest mAN.

In an embodiment, and referring to step 213, this step relates to attempting to obtain a first demanded data throughput for each device wirelessly connected to the master access node, Furthermore, in a further step (not shown), a first device data throughput is obtained for each device wirelessly connected to the master access node, here denoted as the demand of all user devices connected to the mAN i.

If the demanded data throughput of the user devices is available, a third score will be calculated based on whether this demanded data rate of the mAN's devices can be met. In other words, a measure of data rate demand satisfaction may be used for the third score. This is taken into account, because connecting the AN might result in removing one or more of the mAN's user devices from the multi-user (MU-MIMO) groups, which may lower their throughput and their demand satisfaction.

According to a preferred embodiment, the third score may be calculated as

$$S_{i,3} = \begin{cases} \dfrac{1}{N_i} \sum_{n=1}^{N_i} \min\left(1, R_{i,n}/D_{i,n}\right) & if \quad D_{i,n} \neq \emptyset \\[4mm] \dfrac{1}{N_i} \sum_{n=1}^{N_i} \min\left(1, R_{i,n}/R_{i,n}{'}\right) & if \quad D_{i,n} = \emptyset \end{cases}$$

Herein, the demanded data throughput of each user n of $N_i$ connected to the mAN i is denoted by $D_{i,n}$, and the data throughput achieved by user n, after connecting the AN to mAN i, is denoted by $R_{i,n}$. The first condition is used if the demanded data throughputs for the user devices connected to the mAN i, $D_{i,n}$, are available ($D_{i,n} \neq \emptyset$). Then, the score is calculated as the demand satisfaction ratio (i.e. R/D) averaged over all users $N_i$ connected to mAN i. In case of demand oversatisfaction, (i.e. R/D>1), the score will be preferably set to 1 (indicating the third score has no influence on the total score), because the throughput improvements may not reflect a further increase in the user experienced quality of service. On the other hand, if the demanded data throughputs for the user devices connected to the mAN i, $D_{i,n}$, are unavailable ($D_{i,n} = \emptyset$), the ratio between the throughput before connecting the AP (denoted by $R_{i,n}{'}$) and throughput after connecting the AN (denoted by $R_{i,n}$), averaged over all user devices $N_i$, will be used. Here, in case the data throughput after connecting the AN is larger than before connecting the AN, the condition is set to 1, generally indicating that the third score has no influence on the total score, because the user device demand condition as expressed in the third score is not a limiting factor for the present mAN i.

In a further embodiment, a second demanded data throughput demanded by each user device wirelessly connected to the access node via its fronthaul interface. A preferred embodiment is denoted in step 113, of collecting the demanded data throughputs of all the user devices $Z_i$ connected to the AN when connected to mAN i.

Similar to the third score, the demand satisfaction of the users using their user devices connected to the AN may be used to calculate the fourth score $S_{i,4}$ as follows:

$$S_{i,4} = \begin{cases} \dfrac{1}{Z_i} \sum_{z=1}^{Z_i} \min\left(1, R_{i,z}/D_{i,z}\right) & if \quad D_{i,z} \neq \emptyset \\[4mm] 1 & if \quad D_{i,z} = \emptyset \end{cases}$$

In case the second demanded data throughput $D_{i,z}$ is available ($D_{i,z} \neq \emptyset$), as in the equation above the third score is calculated based on the ratio of the data throughputs available for each user device $R_{i,z}$ and $D_{i,z}$. In case of a ratio over one, a value of one is taken (min(1, ...)), since a user will not be dissatisfied in this case. An average is taken over all user devices. In case the second demanded data throughput $D_{i,z}$ is unavailable ($D_{i,z} = 0$), a value of one is taken for the fourth score, in general meaning that the fourth score has no function for the final score.

In case an embodiment of the method is performed wherein scores are calculated, a total score $S_i$, or $S_{i,T}$, for each mAN i may be calculated in step 115. The above four scores may be used to evaluate the association of the AP to each mAN i according to:

$$S_{i,T} = \min\left(S_{i,1}, S_{i,2}\right) \times S_{i,3} \times S_{i,4}$$

In other words, the first term, min($S_{i,1}$, $S_{i,2}$), captures the MU-MIMO based total data throughput of the AN delivered to its connected users, the second and the third terms are used to measure the demand dissatisfaction associated with connecting the AN to the mAN.

When a score has been determined for all mAN's, the AN may then ben associated with the mAN having the highest total score $S_i$. Herein, association to the mAN indicates that the AN will be connected to the wireless network via the highest scoring mAN. The access node uses its wireless backhaul interface to wirelessly connect to the mAN, and may thereafter for instance join beamforming groups according to the mAN's beamforming selection algorithm and may furthermore create beamforming groups with the user devices connected to its fronthaul interface.

It will be understood that other scores may be envisaged. In an embodiment wherein all four scores are taken into account, in general the potential of forming suitable (MU-MIMO) multi-user groups, such as beamforming groups, for both the devices connected to the mAN (first score) and the devices connected to the AN (second score, and furthermore optionally taking the user dissatisfaction for user devices connected to the mAN (third score) and for user devices connected to the AN (fourth score) into account. The dissatisfaction indicates whether a connection quality, indicated by for instance a lowering of the ratio of the available data throughput and the user device demanded data throughput, is increasing.

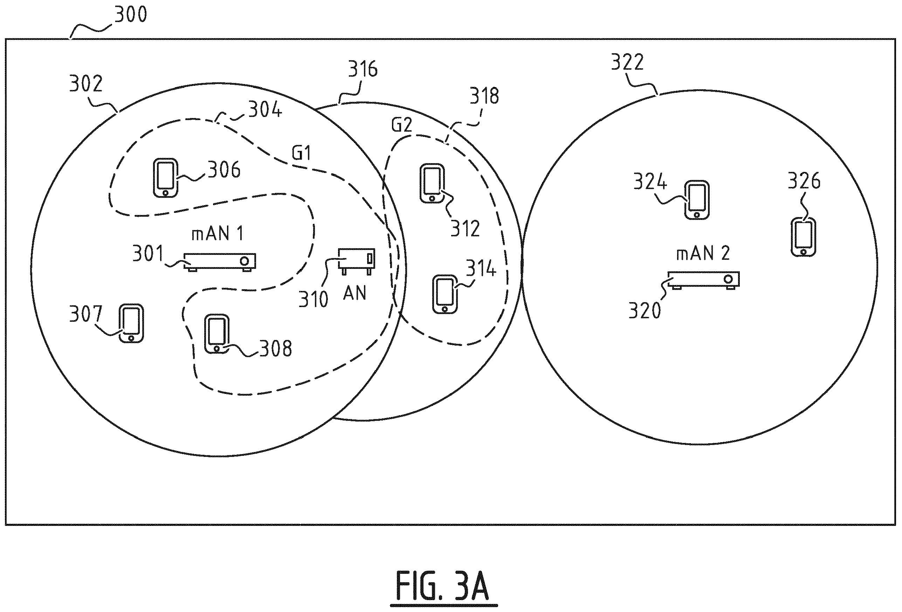

Figure 3A shows a situation wherein an access node AN 310 is connected to a mAN 1, 301, and is allowed by the mAN 1 to be part of MU-MIMO beamforming group G1, schematically depicted with dashed line 304. User devices 308 and 306, which are also connected to mAN 1 are part of G1, together with AN 310. User device 307 is further connected to mAN 1, but not part of the beamforming group G1. The connection range of the mAN 1 is depicted with circle 302. A further mAN 2, 320, having a range 322 and user devices 324 and 326 are shown, to which mAN 2 the AN is presently not connected. All devices are part of the same wireless network 300.

The AN 310 itself serves user devices 312 and 314 via its fronthaul interface. The AN has formed a further MU-MIMO beamforming group G2, including user devices 312 and 314.

The connection states shown in Figure 3A show a configuration which would result in a relatively high total score, when calculated according to the above described preferred embodiments, because most user devices are included in beamforming groups. Figure 3A furthermore shows one of the states of connection that the AN 310 may be in, for instance when evaluating the data throughputs or any other step of the method of the present patent disclosure for which the AP is temporarily connected to the mAN 1. It may also be that this configuration of network devices has the highest score, and therefore the access node is associated with the mAN 1.

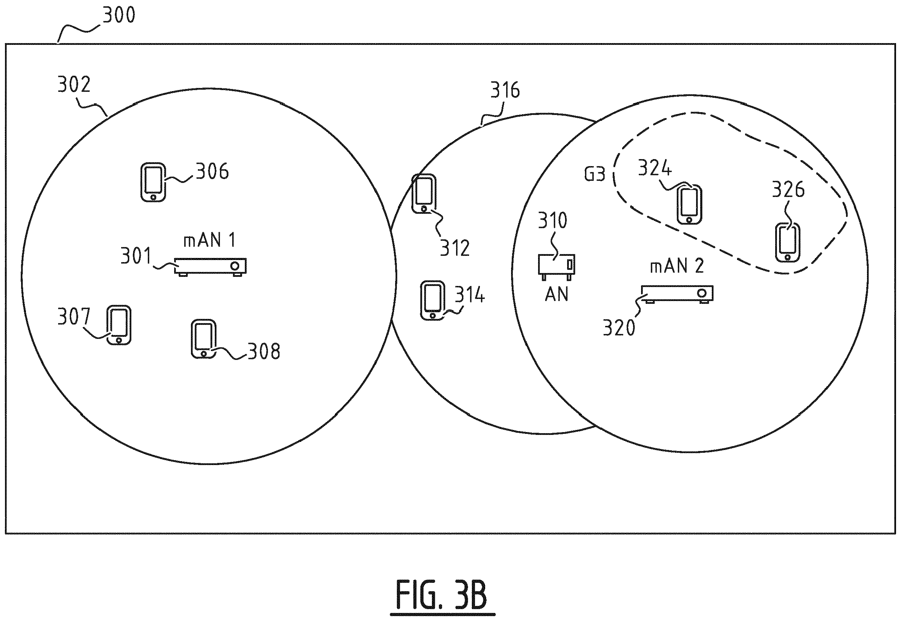

In Figure 3B, a further situation is shown with the same devices as in Figure 3A. In this network configuration, the AN 310 is connected to mAN 2, 320, and is serving user devices 312 and 314. The AN 310 furthermore has a range 316. mAN 2 is able to form a beamforming group G3, schematically depicted with dashed line 328, for user devices 324 and 326. The AN 310 is, however, not included in G3 by the mAN 2. This may be due to a positioning of the AN or any other limitation. Furthermore, the AN 310 can not form a beamforming group for the user devices 312 and 314 connected thereto. Although AN 310 appears moved compared to Figure 3A, this is merely done for sake of clarity. It may be that AN 310 does not move, it may iteratively connect to mAN 1 and mAN 2 and perform the method according the embodiments disclosed herein.

Hence, the network situation of Figure 3B will provide lower quality of service and/or user satisfaction than the network situation of Figure 3A. In terms of the total score, the network situation of Figure 3B would result in a lower total score, for instance calculated according to the embodiments of the method of the present disclosure, than calculated for Figure 3A.

Embodiments of the method and/or devices according to the present method have the advantage that associating the AN to the mAN in a way that both backhaul and fronthaul links are fully utilized by using MU-MIMO. This is done by associating the AN to the mAN that can best accommodate the AN, preferably in downlink beamforming groups (or any other suitable MU-MIMO technique). On the fronthaul link of the AN, the possibility of having a beamforming group for the users connected directly to the AN is also taken into consideration while choosing the mAP. In other words, the association of the AN is performed in order to obtain the most synergistic situation for the AN to be connected to a mAN.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the figures, including any functional blocks labelled as "units", "processors" or "modules", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "unit", "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the FIGS. are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

Whilst the principles of the invention have been set out above in connection with specific embodiments, it is to be understood that this description is merely made by way of example and not as a limitation of the scope of protection which is determined by the appended claims.

**Claims**

1.    Method of associating a multi-user multiple-input multiple-output, MU-MIMO, capable wireless access node to a wireless network, the wireless network comprising one or more master access nodes comprising a wired backhaul interface for coupling the master access node to a backbone network, the method comprising:

determining whether the one or more master access nodes are MU-MIMO capable;
iteratively connecting the access node to each of the master access nodes having MU-MIMO enabled;
obtaining one or more first available data throughputs for respective potential multi-user groups to be served by the master access node for each of the MU-MIMO capable master access nodes having MU-MIMO enabled;
obtaining one or more second available data throughputs for respective potential multi-user groups served by the access node when connected to the master access node; and
associating the access node to the master access node based on the obtained first and second available data throughputs.

2.    Method according to claim 1, further comprising:

determining a first score for each master access node based on the obtained one or more available data throughputs served by the master access node;
determining a second score for each master access node based on the obtained available user data throughputs for respective potential multi-user groups served by the access node;
calculating a total score for each MU-MIMO master access node based on the first and second scores,
wherein the access node associates with the master access node for which a highest total score is calculated.

3.    Method according to claim 1 or 2, wherein the obtaining one or more first available data throughputs comprises:

determining the potential multi-user groups to be served by the master access node to which the access node is connected;
iteratively attempting to join the potential multi-user groups by the access point; and
determining the available data throughputs for each of the potential multi-user groups where an attempted join of the access point was successful.

4.    Method according to claim 3, wherein the obtaining one or more available data throughputs for respective potential multi-user groups comprises:

when pre-selected multi-user groups are obtainable from the master access node:

obtain the pre-selected multi user groups from the master access node; and
when one or more of the pre-selected multi-user groups may be joined by the access point, determine the first score to be the maximum available data throughput of available data throughputs of the respective multi-user groups, and

when pre-selected multi-user groups are not obtainable from the master access node, determine the first score to be the average available throughput of all potential multi-user groups that the access node was able to join.

5. Method according to any of the preceding claims, further comprising:

attempting to obtain a first demanded data throughput for each device wirelessly connected to the master access node;
obtaining a first device data throughput for each device wirelessly connected to the master access node, wherein the first device data throughput indicates a data throughput for each device after the access node is connected to the respective master access node; and
when the demanded data throughput is unavailable, obtaining a second device data throughput for each device wirelessly connected to the master access node, wherein the second device data throughput indicates a data throughput for each device before the access node is connected to the respective master access node,
wherein the associating of the access node is further based on the obtained first device data throughput and the first demanded data throughput or the second device data throughput.

6. Method according to claim 5 in dependence of claims 2-4, further comprising:

when the first demanded data throughput is available, determining a third score for each master access node based on the first device data throughput and the first demanded data throughput; and
when the first demanded data throughput is unavailable, determining a third score for each master access node based on the first device data throughput and the second data throughput,
wherein the total score is calculated based on the first, second and third scores.

7. Method according to any of the preceding claims, wherein the access node comprises a backhaul interface for coupling with the master access node and a fronthaul interface for coupling user devices to the access node, wherein the obtaining one or more available user data throughputs for respective potential multi-user groups served by the access node, for each master access node to which the access node is connected:

obtaining a list of one or more user devices connected to the access point;
determining potential fronthaul multi-user groups to be served by the access node;
determining the available fronthaul data throughputs for each of the potential fronthaul multi-user groups; and
determining a second score based on the available fronthaul data throughputs,
wherein the total score is calculated based on the first and second scores.

8. Method according to claim 7, wherein the determining of the second score comprises:

when pre-selected fronthaul multi-user groups are available to the access node:

obtain a list of the pre-selected fronthaul multi-user groups;
when one or more of the pre-selected multi-user groups is available to the access point, determine the second score to be the sum of available data throughput of the pre-determined multi-user groups; and
when none of the pre-selected multi-user groups may be joined by the access point, determine the second score to be the average throughput of all the potential fronthaul multi-user groups.

9. Method according to any of the preceding claims, wherein the access node comprises a backhaul interface for coupling with the master access node and a fronthaul interface for coupling user devices to the access node, the method further comprising:

attempting to obtain a second demanded data throughput for each user device wirelessly connected to the access node;
obtaining a third device data throughput for each user device wirelessly connected to the access node; and
wherein the demanded data throughput is available, the associating of the access node is further based on the obtained third device data throughput and the second demanded data throughput.

10. Method according to claim 9 in dependence of claims 2-8, further comprising:

when the second demanded data throughput is available, determining a fourth score for each master access node based on the third device data throughput and the second demanded data throughput, wherein the total score is calculated based on the first, second, third and fourth scores.

11. Method according to claim 10, wherein the total score for each master access node is calculated based by multiplying the third score, the fourth score and the lowest one of the first and second scores, wherein, when a score is unavailable, said unavailable score is equal to one.

12. Controller for a computing device, wherein the controller is configured to:

determine whether the one or more master access nodes are MU-MIMO capable;
iteratively connect the access node to each of the master access nodes having MU-MIMO enabled;
obtain one or more first available data throughputs for respective potential multi-user groups to be served by the master access node for each of the MU-MIMO capable master access nodes having MU-MIMO enabled;
obtain one or more second available data throughputs for respective potential multi-user groups served by the access node when connected to the master access node; and
associate the access node to the master access node based on the obtained first and second available data throughputs.

13. Multi-user multiple-input multiple-output, MU-MIMO, capable access node, comprising:

a backhaul interface configured for coupling the access node to a backbone network; and
a fronthaul interface configured for wirelessly connecting the access node to one or more user devices; and
a controller, wherein the controller is configured to:

determine whether the one or more master access nodes are MU-MIMO capable;
iteratively connect the access node to each of the master access nodes having MU-MIMO enabled;
obtain one or more first available data throughputs for respective potential multi-user groups to be served by the master access node for each of the MU-MIMO capable master access nodes having MU-MIMO enabled;
obtain one or more second available data throughputs for respective potential multi-user groups served by the access node when connected to the master access node; and
associate the access node to the master access node based on the obtained first and second available data throughputs.

14. Access node according to claim 13, wherein the controller is further configured to:

attempt to obtain a first demanded data throughput for each device wirelessly connected to the master access node;
obtain a first device data throughput for each device wirelessly connected to the master access node, wherein the first device data throughput indicates a data throughput for each device after the access node is connected to the respective master access node; and
when the demanded data throughput is unavailable, obtain a second device data throughput for each device wirelessly connected to the master access node, wherein the second device data throughput indicates a data throughput for each device before the access node is connected to the respective master access node,
wherein the associating of the access node is further based on the obtained first device data throughput and the first demanded data throughput or the second device data throughput.

15. A computer program product comprising a computer-executable program of instructions for performing, when executed on a computer, the steps of the method of any one of claims 1-10.

FIG. 1A

MASTER ACCESS NODE — 140

BACKBONE NETWORK — 120

BACKHAUL INTERFACE — 142

FRONTHAUL INTERFACE — 144

CONTROLLER — 146

USER DEVICE — 150

ACCESS NODE — 134

121

100

151

135

## FIG. 1B

201

If MU-MIMOEnabled in mAN i?     No

Yes

203

Temporarily connect the AN to mAN i

205

Calculate the throughput of all beamforming
groups in mAN i $(R_{i,j})$

207

Collect the demand of all mAN's users $(D_{i,n})$

209

If MU-MIMOEnabled in AN AND Z>1?     No

Yes

211

Calculate the throughput of all beamforming
groups of AN's users $(R_{i,p})$

213

Collect the demand of all AN's users $(D_{i,z})$

215

Calculate the score for mAN $(S_i)$

217

Select the next available AN (i=i+1)

FIG. 2

FIG. 3A

EP 3 370 347 A1

FIG. 3B

Europäisches
Patentamt

European
Patent Office

Office européen
des brevets

**EUROPEAN SEARCH REPORT**

Application Number

EP 17 15 8972

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2009/180396 A1 (KISH WILLIAM S [US]) 16 July 2009 (2009-07-16) <br><br> * abstract; paragraphs [0010], [0019], [0020], [0021], [0028], [0029], [0035]; figures 1,2 * | 1,2, 5-10, 12-15 | INV. <br> H04B7/0452 <br> H04B7/06 <br> H04L5/00 <br> H04W84/12 <br> H04L12/28 <br> H04L12/54 |
| Y | US 2015/230231 A1 (FORNOLES JR TEODORO [US]) 13 August 2015 (2015-08-13) <br><br> * title; figures 2,3 * | 1,2, 5-10, 12-15 | |
| A | US 2005/135316 A1 (CROMER D C; JAKES P J; LOCKER H J) 23 June 2005 (2005-06-23) * paragraph [0037] - paragraph [0039]; figure 5 * | 5-10,14, 15 | |
| A | US 2014/293983 A1 (AMIRI BAHADOR [US] ET AL) 2 October 2014 (2014-10-02) * paragraph [0038] * | 5-10,14, 15 | TECHNICAL FIELDS SEARCHED (IPC) |
| A | US 2015/098392 A1 (HOMCHAUDHURI SANDIP [US] ET AL) 9 April 2015 (2015-04-09) * paragraph [0051] * | 5-10,14, 15 | H04B <br> H04L <br> H04W |
| A | US 2016/345343 A1 (ELSHERIF AHMED RAGAB [US] ET AL) 24 November 2016 (2016-11-24) * paragraph [0033] * | 7-10,14, 15 | |

The present search report has been drawn up for all claims

| Place of search | Date of completion of the search | Examiner |
|---|---|---|
| Munich | 1 September 2017 | Lutz, Tobias |

**ANNEX TO THE EUROPEAN SEARCH REPORT
ON EUROPEAN PATENT APPLICATION NO.**   EP 17 15 8972

This annex lists the patent family members relating to the patent documents cited in the above-mentioned European search report.
The members are as contained in the European Patent Office EDP file on
The European Patent Office is in no way liable for these particulars which are merely given for the purpose of information.

01-09-2017

| Patent document cited in search report | Publication date | Patent family member(s) | Publication date |
|---|---|---|---|
| US 2009180396 A1 | 16-07-2009 | US 2009180396 A1<br>US 2013194969 A1<br>WO 2009088488 A1 | 16-07-2009<br>01-08-2013<br>16-07-2009 |
| US 2015230231 A1 | 13-08-2015 | NONE | |
| US 2005135316 A1 | 23-06-2005 | TW I360339 B<br>US 2005135316 A1<br>WO 2005060177 A1 | 11-03-2012<br>23-06-2005<br>30-06-2005 |
| US 2014293983 A1 | 02-10-2014 | NONE | |
| US 2015098392 A1 | 09-04-2015 | CN 105612790 A<br>EP 3056048 A1<br>JP 6147923 B2<br>JP 2016535475 A<br>JP 2017139785 A<br>KR 20160067931 A<br>KR 20170018471 A<br>US 2015098392 A1<br>US 2016234770 A1<br>WO 2015053972 A1 | 25-05-2016<br>17-08-2016<br>14-06-2017<br>10-11-2016<br>10-08-2017<br>14-06-2016<br>17-02-2017<br>09-04-2015<br>11-08-2016<br>16-04-2015 |
| US 2016345343 A1 | 24-11-2016 | US 2016345343 A1<br>WO 2016191284 A1 | 24-11-2016<br>01-12-2016 |

EPO FORM P0459

For more details about this annex : see Official Journal of the European Patent Office, No. 12/82